# EUROPÄISCHE PATENTSCHRIFT

(11) **EP 2 210 277 B1**
(45) Veröffentlichungstag und Bekanntmachung des Hinweises auf die Patenterteilung: **20.07.2011**
(21) Anmeldenummer: 08851970.7
(22) Anmeldetag: 06.11.2008
(51) Int. Cl.: H01L 31/042, H01L 31/048, E04D 13/18

(54) **PHOTOVOLTAIKANLAGE MIT EINER MATRIX AUS RAHMENLOSEN SOLARMODULEN**
PHOTOVOLTAIC UNIT COMPRISING A MATRIX OF FRAMELESS SOLAR MODULES
INSTALLATION PHOTOVOLTAÏQUE AVEC UNE MATRICE DE MODULES SOLAIRES SANS CADRE

(30) Priorität: 21.11.2007 DE 102007056600
(43) Veröffentlichungstag der Anmeldung: 28.07.2010
(73) Patentinhaber: SOLON SE, 12489 Berlin (DE)
(72) Erfinder: SCHWARZE, Sascha, Oliver, 12277 Berlin (DE); SCHÄFER, Maik, 12247 Berlin (DE)
(86) Internationale Anmeldenummer: PCT/DE2008/001834
(87) Internationale Veröffentlichungsnummer: WO 2009/065377

(56) Entgegenhaltungen:
- EP-A- 0 621 382
- DE-A1- 4 014 200
- DE-A1- 4 440 179
- DE-A1- 10 233 973
- DE-A1-102004 041 279
- DE-A1-102005 050 884
- DE-A1-102005 057 468
- DE-C1- 10 141 308

## Beschreibung

Die Erfindung bezieht sich auf eine Photovoltaikanlage mit einer Matrix aus rahmenlosen, rechteckigen Solarmodulen, die im Randbereich auf ihrer Unterseite zumindest zwei gegenüberliegende Modulschienen aufweisen, über die sie mit einem Substrat lösbar verbunden sind.

Die Photovoltaik bietet unter den erneuerbaren Energieträgern aufgrund der modularen Bauweise der Photovoltaikanlagen aus einzelnen Solarmodulen die vielseitigsten Einsatzmöglichkeiten. Die Hauptanwendung liegt heute im Bereich der Verbraucheranwendung, d.h., Photovoltaikanlagen werden zur Umsetzung von Sonnenenergie in Elektroenergie genutzt. Dazu müssen die Photovoltaikanlagen auf sonnenzugängüchen Substraten installiert werden. Hierbei handelt es sich in der Regel um Freiflächen oder Dächer oder Fassaden von Bauwerken. Insbesondere muss bei der Installation auf eine Sicherung der Solarmodule gegenüber Abheben durch Windkräfte geachtete werden. Rahmenlose Solarmodule zeigen ein besonders elegantes, einheitliches Erscheinungsbild und sind aufgrund fehlender Absätze besonders pflegeleicht, aber schwieriger zu montieren als gerahmte Solarmodule, bei denen der Rahmen als Montageelement genutzt werden kann.

### STAND DER TECHNIK

Aus der DE 10 2005 050 884 A1 ist die Befestigung von rechteckigen, rahmenlosen Solarmodulen bekannt, die in einen Haltrahmen eingedichtet werden. In diesen sind Modulschienen integriert, über die das Solarmodul mit dem Substrat verschraubt wird. Eine direkte Verbindung der Modulschienen mit dem Solarmodul ist nicht vorgesehen. Aus der DE 10 2004 041 279 A1 ist es bekannt, ein Solarmodul über eine Vielzahl von über die Fläche des Solarmoduls verteilten Noppen mit einer Modulplatte durch Klebung oder Klettverschluss zu verbinden. Zum Verbinden der Modulplatten miteinander zur Bildung einer Photovoltaikanlage weisen die Modulplatten seitlich Führungsschienen mit Schwalbenschwanzprofil auf. Aus der DE 10 2005 057 468 A1 ist es bekannt, ein Solarmodul mit einer Leichtbauplatte zu unterstützen, die im Randbereich Modulschienen trägt. Dabei können die Modulschienen als umlaufend geschlossenes Stützprofil (Strangpressprofil) ausgebildet sein. In den Modulschienen befinden sich speziell geformte Nuten, die in mit der Form der Nuten korrespondierenden Verbindungselemente (nicht weiter erläutert oder dargestellt) eingreifen. Zur Montage müssen die Solarmodule mit den Modulschienen in die Befestigungselemente nacheinander eingeschoben werden.

Aus der DE 102 33 973 A1 ist es bekannt, rahmenlose Solarmodule direkt in Verbindungselemente einzuspannen, die als verschiebbare Reiter in eine Substratschiene eingreifen und aus zwei gegeneinander verschraubbaren Spannplatten bestehen, zwischen denen das Solarmodul eingespannt wird. Durch Lösen der Verschraubung können zwar montierte Solarmodule einzeln entnommen werden, es fällt dann aber eine Reihe von verlierbaren Montageteilen an. Pro Solarmodul sind mindestens drei Verbindungselemente - zwei in den Randbereichen, eines in der Mitte - vorgesehen, wobei die Verbindungselemente höchstens mit einem Abstand von 0,6 m zueinander angeordnet sein sollen. Modulschienen sind an den Solarmodulen nicht vorgesehen, sodass durch die Einspannung über die Verbindungselemente große Kräfte punktuell in das Solarmodul eingeleitet werden. In der Draufsicht auf das Solarmodul sind die Verbindungselemente außerdem sichtbar und bewirken eine entsprechende Verschattung der Solarmodule.

Weiterhin ist aus der DE 89 01 194 U1 eine Befestigungsvorrichtung zum Anbringen von Platten an einer Wand oder Decke bekannt, die aus mindestens einem Profilträger und daran befestigbaren Plattenhaltern besteht, wobei jeder Plattenhalter denselben Profilquerschnitt aufweist wie der Profilträger und der Plattenhalter in einer um 180° gewendeten Stellung am Profilträger montiert ist. Der Profilquerschnitt zeigt eine U-förmige und eine gegenüberliegende L-förmige Querseite auf. Beide Seiten weisen Verstärkungsrippen auf. Profilträger und Plattenhalter werden zur Kopplung zunächst ineinandergesteckt und dann seitlich vorschoben und anschließend vollständig ineinandergeschoben, sodass die Profile ineinandergreifen und die Schienen gegen ein seitliches Verschieben gesichert sind. Eine feste, aber lösbare Verbindung der beiden Elemente, die ein Auseinanderziehen der Schienen (Richtung orthogonal zur seitlichen Verschiebung) verhindert, ist jedoch nicht vorgesehen.

Die vorliegende Erfindung geht von der DE 40 14 200 A1 als nächstliegendem Stand der Technik aus. Diese Druckschrift offenbart eine gattungsgemäße Photovoltaikanlage mit einer Mehrzahl rechteckiger Solarmodule, die in Reihen und Spalten matrixförmig angeordnet sind. Die Solarmodule bestehen bevorzugt aus einer Vielzahl von miteinander verschalteten Solarzellen, die in einem Laminat eingebettet sind. Das Laminat nimmt auch die zu- und abführende elektrische/elektronische Verschaltung der Solarzellen auf. Auf der Unterseite der Solarmodule sind zumindest zwei gegenüberliegende Modulschienen aufgeklebt, die mit einem Substrat lösbar verschraubt werden können, sodass die Solarmodule fest mit dem Untergrund verbunden ist. Dabei entsteht aber ein entsprechender Montageaufwand. An den Übergangsstellen zwischen zwei Solarmodulen bzw. zwischen einem Solarmodul und einer äquivalenten Glasscheibe sind klebergefüllte Dichtungsfugen vorgesehen, die einen Zugriff auf die Modulschienen bzw. deren Befestigung mit dem Substrat nicht zulassen, sodass eine einfache Demontage der Solarmodule nicht möglich ist.

### AUFGABENSTELLUNG

Ausgehend von der oben erläuterten, gattungsgemäßen Photovoltaikanlage ist die **AUFGABE** für die vorliegende Erfindung daher darin zu sehen, eine solche weitergebildete Photovoltaikanlage anzugeben, die über besonders einfach aufgebaute und bedienbare Befestigungsmittel der Solarmodule mit dem Substrat verfügt. Die Solarmodule sollen in besonders einfacher Weise zu montieren und zu demontieren sein. Dabei sollen insbesondere einzelne Solarmodule aus der Matrix der Photovoltaikanlage zu Ersatz-, Reinigungs- oder Wartungszwecken ohne großen Aufwand und ohne größere Beeinträchtigung der benachbarten Solarmodule entfernbar sein. Dabei sollen die Montagemittel aber das homogene Erscheinungsbild einer Photovoltaikanlage aus rahmenlosen Solarmodulen nicht stören und keine Verschattung der Solarmodule bewirken. Die **LÖSUNG** für diese Aufgabe ist dem Hauptanspruch zu entnehmen. Vorteilhafte Weiterbildungen der Erfindung sind in den Unteransprüchen aufgezeigt und werden im Folgenden im Zusammenhang mit der Erfindung näher erläutert.

Die erfindungsgemäße Photovoltaikanlage weist eine Matrix aus rahmenlosen, rechteckigen Solarmodulen auf, die über Modulschienen auf ihrer Unterseite mit einem Substrat lösbar verbunden sind. Dabei sind am Substrat lösbar verbundene Substratschienen vorgesehen, in die die Modulschienen eingekoppelt sind. Modulschiene und Substratschiene zeigen im Wesentlichen den gleichen Querschnitt mit einer U-förmigen und einer gegenüberliegenden L-förmigen Querseite und sind in einer um 180° gedrehten Stellung zueinander angeordnet. Mit diesen Merkmalen stimmen Modulschiene und Substratschiene der Erfindung mit dem Profilträger und dem Plattenhalter der aus der DE 89 01 194 U1 bekannten Befestigungsvorrichtung überein. Durch diese Konstruktion ergibt sich aber erst nur eine Sicherung gegen ein seitliches Verschieben der Solarmodule. Eine Sicherung gegen Herausziehen, das einem Abheben der Solarmodule unter Windlast entspricht, besteht noch nicht. Zur Sicherung gegen dieses Herausziehen/Abheben weisen Modul- und Substratschiene bei der Erfindung deshalb jeweils eine parallel zum Solarmodul/Substrat verlaufende Führungsschiene an zumindest den den Randbereichen der Solarmodule zugewendeten Längsseiten auf. Diese sind mittels zumindest eines Verbindungselements lösbar miteinander verbunden. Dabei ist zwischen benachbarten Solarmodulen eine Raumfuge ausreichender Breite zur Bedienung des Verbindungselements vorgesehen. Bei der Erfindung wird also neben der Verschiebungssicherung zusätzlich für eine feste, aber lösbare Verbindung zwischen Photovoltaikanlage und Substrat gesorgt, wodurch ein Abheben der Solarmodule aufgrund von Windkräften sicher vermieden wird. Trotzdem wird das hochästhetische Bild der rahmenlosen Solarmodule in ihrer regelmäßigen Matrixanordnung mit strukturierenden Raumfugen zwischen den Solarmodulen nicht gestört. Sämtliche Verbindungselemente sind unterhalb der Solarmodule angeordnet und verschatten nicht, einfach zu erreichen und zu bedienen. Einzelne Solarmodule können durch die individuelle Zuordnung der Verbindungselemente trotzdem problemlos aus der Matrix herausgenommen und wieder eingefügt werden.

Eine bereits gute Fixierung jedes Solarmoduls ergibt sich, wenn vorteilhaft pro Solarmodul zumindest ein Verbindungselement in den beiden Randbereichen der Modulschienen vorgesehen ist. Zusätzlich kann pro Solarmodul zumindest ein weiteres Verbindungselement in der Mitte der Modulschienen vorgesehen sein. Insbesondere bei großen Solarmodulen ist eine mehrfache Befestigung pro Modulschiene sinnvoll, damit anstehende Windkräfte keine zu großen Angriffsflächen erhalten. Weiterhin ist die grundsätzliche Aufgabe des Verbindungselements in der festen Verbindung von Modulschiene und Substratschiene zu sehen, damit diese einen festen Verbund bilden und das Solarmodul nicht unter Windangriff vom Substrat abhebt. Somit sind alle Konstruktionen für das Verbindungselement im Zusammenspiel mit Modul- und Substratschiene geeignet, die diesen Zweck erfüllen. Vorteilhaft weist das Verbindungselement dabei Mittel zur Festlegung gegenüber Modulschiene und Substratschiene auf. Dabei kann es sich beispielsweise um eine Schraub- oder Kipphebeleinrichtung handeln.

Besonders vorteilhaft ist das Verbindungselement als auf den Führungsschienen verschiebbarer Reiter ausgebildet, wobei die Raumfuge zwischen den Solarmodulen zur Bedienung des Reiters nur eine solche Breite aufweist, dass ein einfaches Verschiebewerkzeug hindurch greifen kann. Durch diese konstruktive Ausgestaltung ist sicher gewährleistet, dass das Verbindungselement dem Monteur immer zur Verfügung steht und keine lösbaren Teile aufweist. Es wird auf die gekoppelten Modul- und Substratschienen aufgeschoben und im Falle der Demontage eines Solarmoduls nur in den Bereich benachbarter Solarmodule (nach geringfügiger Verschiebung der dort vorgesehenen Reiter) hinüber geschoben und dort geparkt. Ein Verlieren des Verbindungselements oder einzelner Teile davon ist dadurch ausgeschlossen. Weiterhin ist es bei der Reiterausführung nicht erforderlich, dass das Verbindungselement von vorne auf das Schienensystem aufgesetzt und befestigt wird, sodass die Fugenbreite zwischen den Solarmodulen entsprechend kleiner dimensioniert werden kann. Sie muss nur so breit bemessen werden, dass ein gekröpftes Verschiebewerkzeug hindurchpasst. Dabei kann es sich um einen einfachen gebogenen Stab handeln. Die Biegung ist erforderlich, um das hinter der Solarmodulkante zurückversetzte Verbindungselement zu erreichen. Noch einfacher wird die Konstruktion, wenn keine betätigbaren Mittel zur Festlegung des Verbindungselements eingesetzt werden, sondern wenn das Mittel zur Festlegung des verschiebbaren Reiters gegenüber der Substratschiene als Federlasche ausgebildet ist, die gegen Modul- und Substratschienen drücken. Die Verschiebung muss dann zwar gegen die Federkraft erfolgen, bei einer entsprechenden Ausgestaltung des Verschiebewerkzeugs ist das aber problemlos möglich, da die zu überwindende Federkraft nicht sehr groß ist.

Die Verschiebbarkeit des Reiters auf den Schienen kann wiederum in den unterschiedlichsten Weisen konstruktiv gelöst werden. Beispielsweise können Stifte am Verbindungselement in entsprechenden Nuten in den Schienen eingreifen. Vorteilhaft können die Führungsschienen schräge Hinterschneidungen aufweisen, wobei die jeweils miteinander durch das Verbindungselement verbundenen Führungsschienen entgegengesetzte schräge Hinterschneidungen aufweisen, die mit entsprechenden schrägen Hinterschneidungen am Verbindungselement eine Schwalbenschwanzführung bilden. Eine derartige Führung lässt sich relativ einfach ohne zusätzliche Elemente herstellen und gewährleistet eine gute Passgenauigkeit. Es ist ein leichtes Verschieben des Reiters unter seiner genauer Ausrichtung und Positionierung möglich, außerdem werden Modul- und Substratschienen durch die schrägen Hinterschneidungen mit einer definierten Kraft gegeneinander gedrückt.

Die Verbindungselemente werden bevorzugt in den Randbereichen der Solarmodule/Modulschienen angeordnet, sodass die Verbindungselemente benachbarter Solarmodule einander gegenüberliegen können. Derartig einander gegenüberliegende Verbindungselemente benachbarter Solarmodule können vorteilhaft miteinander verbunden oder einstückig ausgebildet sein. Das Verschieben kann dann zwar nur paarweise erfolgen, es ergibt sich aber eine vorteilhafte Abstützung und Versteifung der Solarmodule gegeneinander. Weiterhin sind die Solarmodule mit einem Substrat befestigt. Vorteilhaft können dafür einander gegenüberliegende Substratschienen benachbarter Solarmodule mittels einer gemeinsamen Befestigungsschiene am Substrat befestigt sein. Mit einer Schiene können dann alle Solarmodule in einer Reihe bzw. Spalte befestigt werden. Vorteilhaft können dafür einfache Schraubverbindungen, die in das Substrat eingreifen, eingesetzt werden. Dabei kann das Substrat bevorzugt als Unterkonstruktion, Leichtbauplatte, Schräg- oder Flachdach oder Fassade ausgebildet sein. Insbesondere ist eine einfache Montage der Solarmodule direkt auf einer Unterkonstruktion auf dem hölzernen Dachstuhl eines Schrägdaches möglich.

Schließlich können vorteilhaft die Modulschienen abschnittsweise oder umlaufend an allen vier Seiten jedes Solarmoduls angeordnet sein. Das Einkoppeln der Modulschienen in die Substratschienen erfolgt immer nach dem gleichen Ablauf. Zuerst werden die Schienen senkrecht ineinandergesteckt, dann werden die Solarmodule und damit die Modulschienen seitlich verschoben und schließlich vollständig ineinandergeschoben, sodass sie gegen ein weiteres seitliches Verschieben gesichert sind Befinden sich an allen vier Seiten des Solarmoduls Modulschienen, werden die in alle vier oder umlaufenden Substratschienen eingekoppelten Modulschienen zunächst in die eine Richtung verschoben, sodass sie mit den in dieser Richtung liegenden Substratschienen verkoppeln, und dann orthogonal in die andere Richtung verschoben, sodass sie auch mit diesen Substratschienen verkoppeln, schließlich wird die Modulplatte nach unten geführt und dadurch Modul- und Substratschienen vollständig ineinandergeschoben. Die Verbindung der Modulschienen mit der Unterseite der Solarmodule kann wiederum konstruktiv unterschiedlich gelöst werden. Vorteilhaft ist eine einfache Verklebung, beispielsweise mit Terrostat. Dabei kann zum Ausgleich von Wärmedehnungen auch eine elastische Ausgleichsschiene zwischen gelegt sein. Weitere konstruktive Details zu der Photovoltaikanlage nach der Erfindung sind dem nachfolgenden speziellen Beschreibungsteil zu entnehmen.

### AUSBILDUNGSBEISPIELE

Ausführungsformen der Photovoltaikanlage nach der Erfindung mit einem gegen Abheben sicherndes Verbindungselement zwischen Modul- und Substratschiene werden nachfolgend anhand der schematischen Figuren zum weiteren Verständnis der Erfindung näher erläutert. Dabei zeigt:
- **FIGUR 1**: Querschnitt der Photovoltaikanlage nach der Erfindung im Bereich der Raumfuge zwischen zwei Solarmodulen,
- **FIGUR 2**: eine Schnittdarstellung auf ein Solarmodul im Bereich der Raumfuge,
- **FIGUR 3**: einen Reiter im Detail und
- **FIGUR 4**: zwei alternative Ausbildungen von Reitern.

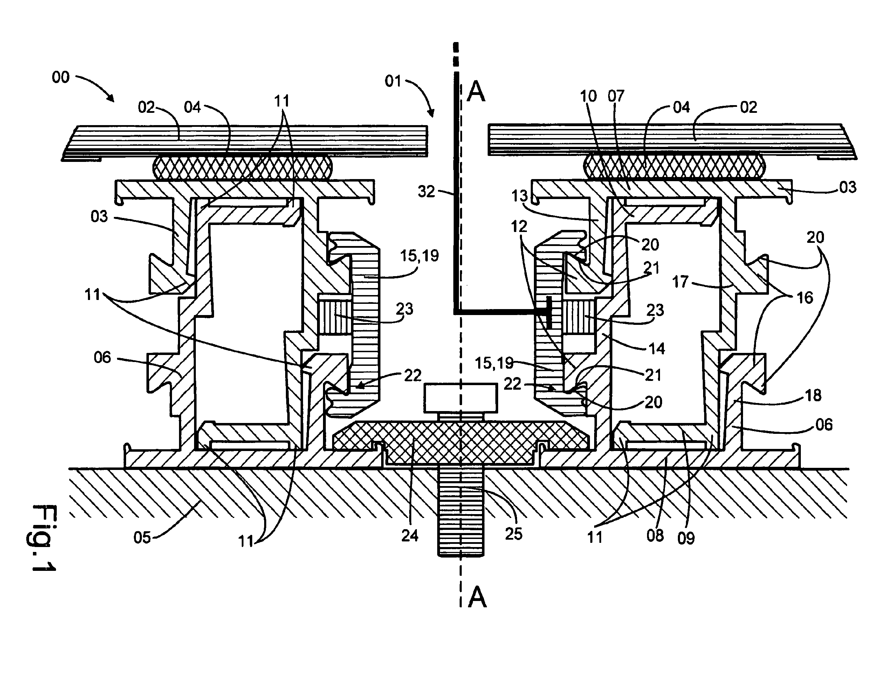

Die **FIGUR 1** zeigt im Querschnitt ein Detail aus einer Photovoltaikanlage **00** nach der Erfindung im Bereich einer Raumfuge **01** zwischen zwei rahmenlosen, rechteckigen Solarmodulen **02** (seitlich abgebrochen dargestellt), die in einer regelmäßigen Matrix angeordnet sind, sodass sich ein harmonisches, ungestörtes Erscheinungsbild der Photovoltaikanlage ergibt. In den einander zugewandten Randbereichen der Solarmodule **02** ist jeweils auf der Unterseite eine Modulschiene **03** angeordnet. Im gezeigten Ausführungsbeispiel sind die Modulschienen **03** mittels elastischer Klebefugen **04** mit den Solarmodulen **02** verklebt. Über die Modulschienen **03** sind die Solarmodule **02** lösbar, aber fest mit einem Substrat **05** verbunden. Dabei kann es sich bei dem Substrat **05** beispielsweise um eine Unterkonstruktion, Leichtbauplatte, Schräg- oder Flachdach oder Fassade handeln. Es ist sowohl eine horizontale als auch eine vertikale Montage der Solarmodule **02** möglich.

Zur Verbindung der Solarmodule **02** mit dem Substrat **05** sind die Modulschienen **03** jeweils mit Substratschienen **06** lösbar verkoppelt. Modulschiene **03** und Substratschiene **06** sind in einer um 180° gedrehten Stellung zueinander angeordnet und weisen im Wesentlichen den gleichen Querschnitt auf. Die an das Solarmodul **02** anschließende Querseite **07** der Modulschiene **03** bzw. die an das Substrat **04** anschließende Querseite **08** der Substratschiene **06** ist L-förmig ausgebildet. Die jeweils gegenüberliegenden Querseiten **09,10** weisen einen U-förmigen Verlauf aus. Zur Vermeidung von statischen Überbestimmungen zwischen den aufeinander aufliegenden Modul- und Substratschienen **03, 06** sind die anschließenden Querseiten **07, 08** und die offenen Enden der gegenüberliegenden Querseiten **09,10** jeweils mit Auflagem **11** versehen. Durch die Ausbildung von Modul- und Substratschienen **03, 06** sowie durch ihre diametral gedreht Anordnung zueinander können sie bei der Montage der Solarmodule **02** zunächst ineinandergesteckt, dann seitlich verschoben und schließlich vollständig ineinandergeschoben werden. In der vollständig ineinandergeschobenen Position sind sie und damit die Solarmodule **02 -** gegen eine seitliche Verschiebung gesichert. Ein Auseinanderziehen von Modulschienen **03** und Substratschienen **06 -** und damit ein Abheben der Solarmodule **02 -** ist jedoch noch möglich.

Zur Vermeidung des Auseinanderziehens von Modulschienen **03** und Substratschienen **06** weisen diese parallel zum Solarmodul **02** bzw. zum Substrat **05** verlaufende Führungsschienen **12** an zumindest den der Raumfuge **01** zugewandten Längsseiten **13,14** auf. Über die beiden Führungsschienen **12** auf den der Raumfuge **01** zugewandten Längsseiten **13,14** von Modul- und Substratschiene **03, 06** werden diese dann mittels zumindest eines Verbindungselements **15** lösbar miteinanderverbunden. Dabei weist die Raumfuge **01** zwischen der benachbarten Solarmodulen **02** eine zur Bedienung des Verbindungselements **15** ausreichende Breite auf. Im gewählten Ausführungsbeispiel weisen die Modulschiene **03** und die Substratschiene **06** exakt das gleiche Profil auf, wodurch die Herstellung der Schienen beispielsweise durch Stranggusspressen und deren Bevorratung wesentlich vereinfacht wird. Modulschiene **03** und Substratschiene **06** verfügen somit neben den Führungsschienen **12** an den der Raumfuge **01** zugewandten Längsseiten **13,14** auch noch über Führungsschienen **16** an den der Raumfuge abgewandten Längsseiten **17, 18.** Diese werden zu Verbindung von Modulschiene **03** und Substratschiene **06** jedoch im gezeigten Ausführungsbeispiel nicht genutzt, da sie unzugänglich unterhalb des Solarmoduls **02** liegen. Zur gegenseitigen Führung weisen Modulschiene **03** und Substratschiene **06** ebenfalls an ihren zugewandten Längsseiten **13, 18** Auflager **11** auf.

Im gezeigten Ausführungsbeispiel ist das Verbindungselement **15** als auf den Führungsschienen **13,14** verschiebbarerer Reiter **19** ausgebildet. Dazu weisen die Führungsschienen **13,14** schräge Hinterschneidungen **20** auf. Die jeweils miteinander durch das Verbindungselement **15** verbundenen Führungsschienen **13,14** weisen entgegengesetzte schräge Hinterschneidungen **20** auf. Zusammen mit schrägen Hinterschneidungen **21** am verschiebbaren Reiter **19** bilden die schrägen Hinterschneidungen **20** an Modul- und Substratschienen **03, 06** eine Schwalbenschwanzführung **22** aus. Im Falle des verschiebbaren Reiters **19** als Verbindungselement **15** kann die Raumfuge **01** zwischen den Solarmodulen **02** zur Verschiebung des Reiters **19** sehr schmal sein. Es muss nur ein einfaches Verschiebewerkzeug **32** nach der Art eines Schraubendrehers hindurchgreifen können (in der **FIGUR 1** gestrichelt angedeutet). Zur Festlegung des verschiebbaren Reiters **19** gegenüber der Substratschiene **06** ist im gewählten Ausführungsbeispiel am Reiter **19** eine Federlasche **23** vorgesehen. Im unteren Bereich der einander gegenüberliegenden Substratschienen **06** von benachbarten Solarmodulen **02** ist eine über die Substratschienen **06** übergreifende Befestigungsschiene **24** angeordnet, die mittels einer Verschraubung **25** am Substrat **05** anschraubbar ist. Dadurch wird die feste Verbundkette der Solarmodule **02** mit dem Substrat **05** geschlossen, und es ist sicher gewährleistet, dass die Solarmodule **02** unter Windkraft nicht vom Substrat **05** abheben können.

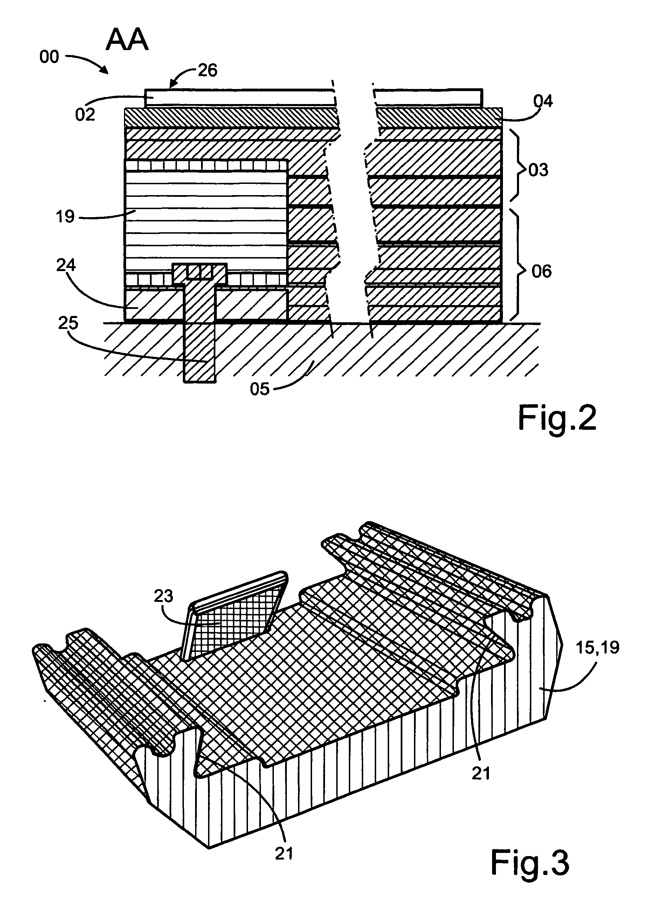

Die **FIGUR 2** zeigt eine abgebrochene Schnittdarstellung im Raumspalt **01** mit einer Ansicht der rechten Hälfte der Photovoltaikanlage **00** (Schnitt **AA** gemäß **FIGUR 1**). Zu erkennen sind das Solarmodul **02,** die Klebefuge **04,** die Modulschiene **03**, der Reiter **19,** die Substratschiene **06,** die Befestigungsschiene **24** und die Verschraubung **25** zur Verschraubung im Substrat **05.** Ersichtlich ist die Breite des Reiters **19** und seine Positionierung im Randbereich **26** des Solarmoduls **02.** Im gewählten Ausführungsbeispiel stehen die Schienen **03, 06** und der Reiter **19** geringfügig seitlich über das Solarmodul **02** hinaus, ohne dabei jedoch den homogenen Gesamteindruck der rahmenlosen Solarmodule **02** in der Draufsicht zu beeinträchtigen.

Die **FIGUR 3** zeigt eine perspektivische Ansicht des Reiters **19.** Zu erkennen sind die schrägen Hinterschneidungen **21** zur Bildung der Schwalbenschwanzführung **22** und die Federlasche **23** zur Abspannung des Reiters **19** gegen die -Substratschiene **06** (vergleiche **FIGUR 1**).

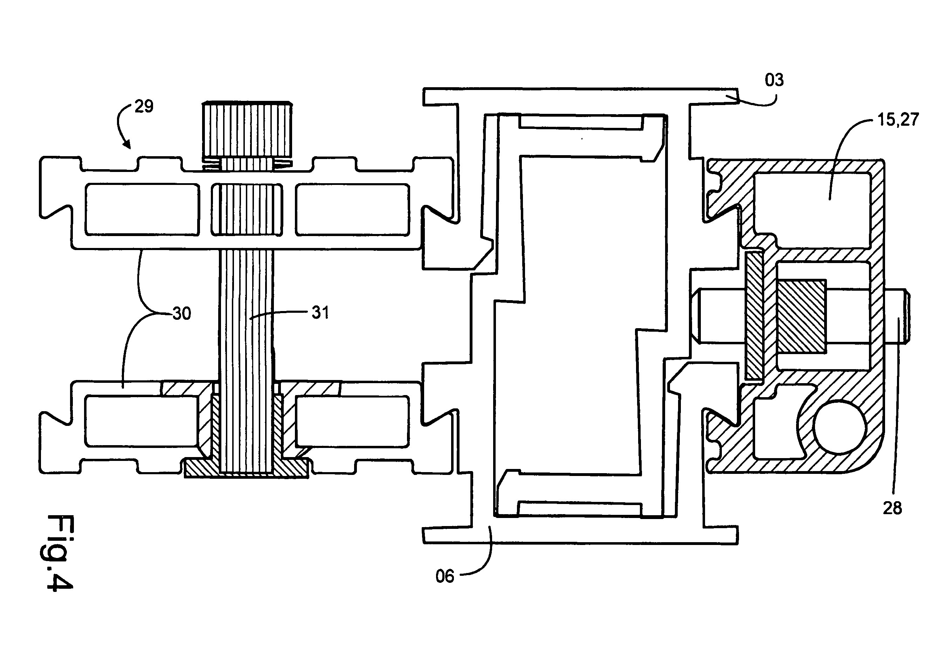

Die **FIGUR 4** zeigt rechts eine alternative Ausführungsform eines Reiters **27** mit einer Verschraubung **28** zur Abspannung des Reiters **27** gegenüber der Modulschienen **03.** Links ist ein Doppelreiter **29** zur gleichzeitigen Verbindung der Schienensysteme von zwei Solarmodulen **02** dargestellt. Der Doppelreiter **29** besteht aus zwei identischen Führungsstücken **30,** die durch eine Verschraubung **31** miteinander verbunden werden. Beide alternativen Reiter **27, 29** wären im Bereich der Raumfuge **01** anzuordnen.

### BEZUGSZEICHENLISTE

- **00**: Photovoltaikanlage
- **01**: Raumfuge
- **02**: rahmenloses, rechteckiges Solarmodul
- **03**: Modulschiene
- **04**: Klebefuge
- **05**: Substrat
- **06**: Substratschiene
- **07**: an 02 anschließende Querseite von 03
- **08**: an 05 anschließende Querseite von 06
- **09**: 07 gegenüberliegende Querseite von 03
- **10**: 08 gegenüberliegende Querseite von 06
- **11**: Auflager
- **12**: 01 zugewandte Führungsschiene
- **13**: 01 zugewandte Längsseite von 03
- **14**: 01 zugewandte Längsseite von 06
- **15**: Verbindungselement
- **16**: von 01 abgewandte Führungsschiene
- **17**: von 01 abgewandte Längsseite von 03
- **18**: von 01 abgewandte Längsseite von 06
- **19**: verschiebbarerer Reiter
- **20**: schräge Hinterschneidung an 12, 16
- **21**: schräge Hinterschneidung an 19
- **22**: Schwalbenschwanzführung
- **23**: Federlasche
- **24**: Befestigungsschiene
- **25**: Verschraubung von 24
- **26**: Randbereich von 02
- **27**: Reiter (alternative Ausführungsform)
- **28**: Verschraubung von 27
- **29**: Doppelreiter
- **30**: Führungsstück
- **31**: Verschraubung von 29
- **32**: Verschiebewerkzeug

## Patentansprüche

1. Photovoltaikanlage (00) mit einer Matrix aus rahmenlosen, rechteckigen Solarmodulen (02), die im Randbereich (26) auf ihrer Unterseite zumindest zwei gegenüberliegende Modulschienen (03) aufweisen, über die sie mit einem Substrat lösbar (05) verbunden sind,
**dadurch gekennzeichnet, dass**
• jede Modulschiene (03) in eine mit dem Substrat (05) lösbar verbundene Substratschiene (06) eingekoppelt ist, wobei Modul- und Substratschiene (03/06)
o in einer um 180° gedrehten Stellung zueinander angeordnet sind und
o im Wesentlichen den gleichen Querschnitt mit einer an das Solarmodul/Substrat (02/05) anschließenden U-förmigen und einer gegenüberliegenden L-förmigen Querseite (07/08) sowie
o jeweils eine parallel zum Solarmodul/Substrat (02/05) verlaufende Führungsschiene (12) an zumindest den den Randbereichen (26) der Solarmodule (02) zugewandten Längsseiten (13/14) aufweisen,
• dass die Führungsschienen (12) an den den Randbereichen (26) der Solarmodule (02) zugewandten Längsseiten (13/14) von Modul- und Substratschiene (03/06) mittels zumindest eines Verbindungselements (15) lösbar miteinander verbunden sind, und
• dass zwischen den benachbarten Solarmodulen (02) eine Raumfuge (01) ausreichender Breite zur Bedienung des Verbindungselements (15) vorhanden ist.

2. Photovoltaikanlage nach Anspruch 1,
**dadurch gekennzeichnet, dass**
pro Solarmodul (02) zumindest ein Verbindungselement (15) in den beiden Randbereichen (26) der Solarmodule (02) vorgesehen ist.

3. Photovoltaikanlage nach Anspruch 2,
**dadurch gekennzeichnet, dass**
pro Solarmodul (02) zumindest ein weiteres Verbindungselement (15) in der Mitte des Solarmoduls (02) vorgesehen ist.

4. Photovoltaikanlage nach einem der Ansprüche 1 bis 3,
**dadurch gekennzeichnet, dass**
das Verbindungselement (15) Mittel zur Festlegung gegenüber Modul- und Substratschiene (03/06)aufweist.

5. Photovoltaikanlage nach einem der Ansprüche 1 bis 4,
**dadurch gekennzeichnet, dass**
das Verbindungselement (15) als auf den Führungsschienen (12) verschiebbarer Reiter (19) ausgebildet ist, wobei die Raumfuge (01) zwischen den Solarmodulen (02) zur Bedienung des Reiters (19) nur eine solche Breite aufweist, dass ein einfaches Verschiebewerkzeug hindurch greifen kann.

6. Photovoltaikanlage nach den Ansprüchen 4 und 5,
**dadurch gekennzeichnet, dass**
das die Mittel zur Festlegung des verschiebbaren Reiters (19) gegenüber der Substratschiene (06) als Federlasche (23) ausgebildet sind.

7. Photovoltaikanlage nach einem der Ansprüche 1 bis 6,
**dadurch gekennzeichnet, dass**
die Führungsschienen (12, 16) schräge Hinterschneidungen (20) aufweisen, wobei die jeweils miteinander durch das Verbindungselement (15, 19) verbundenen Führungsschienen (12) entgegengesetzte schräge Hinterschneidungen (20) aufweisen, die mit entsprechenden schrägen Hinterschneidungen (21) am Verbindungselement (15, 19) eine Schwalbenschwanzführung (22) bilden.

8. Photovoltaikanlage nach einem der Ansprüche 1 bis 7,
**dadurch gekennzeichnet, dass**
einander gegenüberliegende Verbindungselemente (29) benachbarter Solarmodule (02) miteinander verbunden oder einstückig ausgebildet sind.

9. Photovoltaikanlage nach einem der Ansprüche 1 bis 8,
**dadurch gekennzeichnet, dass**
einander gegenüberliegende Substratschienen (06) benachbarter Solarmodule (02) mittels einer gemeinsamen Befestigungsschiene (24) am Substrat (05) befestigt sind.

10. Photovoltaikanlage nach einem der Ansprüche 1 bis 9,
**dadurch gekennzeichnet, dass**
die Modulschienen (03) abschnittsweise oder umlaufend an allen vier Seiten jedes Solarmoduls (02) angeordnet sind.

11. Photovoltaikanlage nach einem der Ansprüche 1 bis 10,
**dadurch gekennzeichnet, dass**
die Modulschienen (03) an die Unterseite des Solarmoduls (02) angeklebt sind.

12. Photovoltaikanlage nach einem der Ansprüche 1 bis 11,
**dadurch gekennzeichnet, dass**
das Substrat (05) als Unterkonstruktion, Leichtbauplatte, Schräg- oder Flachdach oder Fassade ausgebildet ist.

## Claims

1. Photovoltaic plant (00) with a matrix made up of frameless rectangular solar modules (02) which have at least two opposite module rails (03) in the edge region (26) on their underside, by means of which they are releasably connected to a substrate (05),
**characterised in that**
• each module rail (03) is coupled into a substrate rail (06) which is releasably connected to the substrate (05), wherein module and substrate rail (03/06)
o are arranged in positions which are rotated by 180° relative to one another and
o essentially have the same cross section with a U-shaped transverse side adjacent to the solar module/substrate (02/05) and an opposite L-shaped transverse side (07/08), as well as
o a guide rail (12) running parallel to the solar module/substrate (02/05) in each case on at least the longitudinal sides (13/14) which face the edge regions (26) of the solar modules (02),
• **in that** the guide rails (12) are releasably connected to one another at the longitudinal sides (13/14) of the module and substrate rails (03/06) which face the edge regions (26) of the solar modules (02) by means of at least one connecting element (15), and
• **in that** a spacer gap (01) of sufficient width for operating the connecting element (15) is provided between adjacent solar modules (02).

2. Photovoltaic plant according to Claim 1,
**characterised in that**
at least one connecting element (15) is provided per solar module (02) in the two edge regions (26) of the solar modules (02).

3. Photovoltaic plant according to Claim 2,
**characterised in that**
at least one further connecting element (15) is provided per solar module (02) in the middle of the solar module (02).

4. Photovoltaic plant according to any one of Claims 1 to 3,
**characterised in that**
the connecting element (15) has means for securing with respect to the module and substrate rails (03/06).

5. Photovoltaic plant according to any one of Claims 1 to 4,
**characterised in that**
the connecting element (15) is constructed as a slider (19) which can be displaced on the guide rails (12), wherein the spacer gap (01) between the solar modules (02) for operating the slider (19) only has a width of such a type that a single displacement tool can engage through it.

6. Photovoltaic plant according to Claims 4 and 5,
**characterised in that**
the means for securing the displaceable slider (19) with respect to the substrate rail (06) are constructed as a spring shackle (23).

7. Photovoltaic plant according to any one of Claims 1 to 6,
**characterised in that**
the guide rails (12, 16) have oblique undercuts (20), wherein the guide rails (12) connected to one another in each case by means of the connecting element (15, 19) have opposing oblique undercuts (20) which form a dovetail guide (22) with corresponding oblique undercuts (21) on the connecting element (15, 19).

8. Photovoltaic plant according to any one of Claims 1 to 7,
**characterised in that**
mutually opposite connecting elements (29) of adjacent solar modules (02) are connected to one another or constructed in one piece.

9. Photovoltaic plant according to any one of Claims 1 to 8,
**characterised in that**
mutually opposite substrate rails (06) of adjacent solar modules (02) are fixed to the substrate (05) by means of a common fixing rail (24).

10. Photovoltaic plant according to any one of Claims 1 to 9,
**characterised in that**
the module rails (03) are arranged in sections or continuously on all four sides of each solar module (02).

11. Photovoltaic plant according to any one of Claims 1 to 10,
**characterised in that**
the module rails (03) are adhesively bonded to the underside of the solar module (02).

12. Photovoltaic plant according to any one of Claims 1 to 11,
**characterised in that**
the substrate (05) is constructed as a substructure, lightweight building board, sloping or flat roof or facade.

## Revendications

1. Installation photovoltaïque (00) présentant une matrice constituée de modules solaires (02) sans cadre et rectangulaires, lesquels présentent dans la zone périphérique (26) sur leur côté inférieur au moins deux rails modules (03) opposés, par lesquels ils sont reliés de façon amovible à un substrat (05), **caractérisée en ce que**
• chaque rail module (03) est injecté dans un rail substrat (06) relié de façon amovible au substrat (05), le rail module et le rail substrat (03/06)
o étant disposés l'un par rapport à l'autre dans une position tournée de 180° et
o présentant sensiblement la même section avec un côté transversal (07/08) contigu au module solaire/substrat (02/05) en forme de U, et un côté transversal (07/08) opposé et en forme de L ainsi que
o à chaque fois un rail de guidage (12) agencé parallèlement au module solaire/substrat (02/05) sur au moins les côtés longitudinaux (13/14) tournés vers les zones périphériques (26) des modules solaires (02),
• **en ce que** les rails de guidage (12) sont reliés les uns aux autres de façon amovible sur les côtés longitudinaux (13/14), tournés vers les zones périphériques (26) des modules solaires (02), du rail module et du rail substrat (03/06) au moyen d'au moins un élément de liaison (15), et
• **en ce qu'**un joint d'espace (01) de largeur suffisante destiné à la commande de l'élément de liaison (15) est présent entre les modules solaires (02) voisins.

2. Installation photovoltaïque selon la revendication 1,
**caractérisée en ce**
**qu'**au moins un élément de liaison (15) est prévu par module solaire (02) dans les deux zones périphériques (26) des modules solaires (02).

3. Installation photovoltaïque selon la revendication 2,
**caractérisée en ce**
**qu'**au moins un autre élément de liaison (15) est prévu par module solaire (02) au centre du module solaire (02).

4. Installation photovoltaïque selon l'une quelconque des revendications 1 à 3,
**caractérisée en ce que**
l'élément de liaison (15) présente des moyens pour la fixation par rapport au rail module et au rail substrat (03/06).

5. Installation photovoltaïque selon l'une quelconque des revendications 1 à 4,
**caractérisée en ce que**
l'élément de liaison (15) est conçu sous forme de cavalier (19) coulissant sur les rails de guidage (12), le joint d'espace (01) entre les modules solaires (02) pour la commande du cavalier (19) présentant uniquement une largeur telle qu'un outil de coulissement simple peut être passé à travers.

6. Installation photovoltaïque selon l'une quelconque des revendications 4 et 5,
**caractérisée en ce que**
les moyens pour la fixation du cavalier (19) coulissant par rapport au rail substrat (06) sont conçus sous forme de patte à ressort (23).

7. Installation photovoltaïque selon l'une quelconque des revendications 1 à 6,
**caractérisée en ce que**
les rails de guidage (12, 16) présentent des contre-dépouilles (20) inclinées, les rails de guidage (12) reliés à chaque fois les uns aux autres par l'élément de liaison (15, 19) présentant des contre-dépouilles (20) opposées et inclinées, qui forment un guide en queue d'aronde (22) avec des contre-dépouilles (21) inclinées correspondantes sur l'élément de liaison (15, 19).

8. Installation photovoltaïque selon l'une quelconque des revendications 1 à 7,
**caractérisée en ce que**
des éléments de liaison (29) se faisant face de modules solaires (02) voisins sont reliés les uns aux autres ou sont conçus d'une seule pièce.

9. Installation photovoltaïque selon l'une quelconque des revendications 1 à 8,
**caractérisée en ce que**
des rails substrat (06) se faisant face de modules solaires (02) voisins sont fixés sur le substrat (05) au moyen d'un rail de fixation (24) commun.

10. Installation photovoltaïque selon l'une quelconque des revendications 1 à 9,
**caractérisée en ce que**
les rails module (03) sont disposés par tronçon ou de façon périphérique sur l'ensemble des quatre côtés de chaque module solaire (02).

11. Installation photovoltaïque selon l'une quelconque des revendications 1 à 10,
**caractérisée en ce que**
les rails module (03) sont collés sur la face inférieure du module solaire (02).

12. Installation photovoltaïque selon l'une quelconque des revendications 1 à 11,
**caractérisée en ce que**
le substrat (05) est conçu sous forme de construction inférieure, panneau allégé, toit incliné ou toit plat ou façade.
